**Europäisches Patentamt**

**European Patent Office**

**Office européen des brevets**

(19)

(11) Veröffentlichungsnummer: **0 399 229**
**A1**

(12) # EUROPÄISCHE PATENTANMELDUNG

(21) Anmeldenummer: **90107845.1**

(22) Anmeldetag: **25.04.90**

(51) Int. Cl.5: **A63F 9/06, A63F 9/18, G09B 3/04**

(30) Priorität: **27.04.89 DE 8905330 U**

(43) Veröffentlichungstag der Anmeldung:
**28.11.90 Patentblatt 90/48**

(84) Benannte Vertragsstaaten:
**AT BE CH DE DK FR GB IT LI NL SE**

(71) Anmelder: **Drkosch, Dieter**
**Tengstrasse 21**
**D-8000 München 40(DE)**

(72) Erfinder: **Drkosch, Dieter**
**Tengstrasse 21**
**D-8000 München 40(DE)**

(74) Vertreter: **Zeitler, Giselher, Dipl.-Ing.**
**Patentanwalt Herrnstrasse 15 Postfach 26 02 51**
**D-8000 München 26(DE)**

(54) **Eintragspiel.**

(57) Ein Eintragspiel ist als Blattsatz 1,2 ausgebildet, bei dem unter einem als Aufgabenblatt 1 ausgestalteten Deckblatt, insbesondere aus Papier, deckungsgleich wenigstens ein Unterblatt angeordnet ist, das als Lösungsblatt 2 ausgestaltet und mit dem Aufgabenblatt 1 verbunden ist.

Fig. 2

EP 0 399 229 A1

Die Erfindung betrifft ein Eintragspiel gemäß dem Oberbegriff des Anspruchs 1.

Der Erfindung liegt die Aufgabe zugrunde, mit einfachen Mitteln ein Eintragspiel zu schaffen, das ein Rätselspiel, Quizspiel usw. darstellt, mit geringem Aufwand herstellbar ist und vielfältige Gestaltungs- sowie Spielmöglichkeiten aufweist.

Die Merkmale der zur Lösung dieser Aufgabe geschaffenen Erfindung ergeben sich aus Anspruch 1. Vorteilhafte Ausgestaltungen hiervon sind in den weiteren Ansprüchen be schrieben.

Das erfindungsgemäß geschaffene Eintragspiel stellt ein Rätselspiel, Quizspiel usw. dar, das als Blattsatz ausgebildet ist. Bei diesem Blattsatz ist unter einem als Aufgabenblatt ausgestalteten Deckblatt, insbesondere aus Papier, deckungsgleich wenigstens ein Unterblatt angeordnet. Letzteres ist als Lösungsblatt ausgestaltet und mit dem Aufgabenblatt verbunden.

Das Aufgabenblatt weist gedruckte Vorgaben in Form von Punkten, Linien oder Schriften auf. Dieselben gedruckten Vorgaben sind auch auf dem Lösungsblatt deckungsgleich angeordnet; außerdem ist das Lösungsblatt mit gedruckten Zusatzvorgaben versehen, die auf dem Aufgabenblatt fehlen und ebenfalls die Form von gedruckten Punkten, Linien oder Schriften aufweisen. Anstelle des Zusatzaufdruckes kann das Lösungsblatt auch einen fehlenden Aufdruck aufweisen.

Zweckmäßigerweise sind das Aufgabenblatt und das Lösungsblatt miteinander verbunden, und zwar durch eine am Rand angeordnete lösbare Verbindung. Diese Verbindung kann vollständig am Rand umlaufen oder auch nur an einer Seite bzw. an einigen Seiten vorgesehen sein. Hierbei ist es von Vorteil, wenn diese lösbare Verbindung eine Perforation aufweist, die sowohl im Aufgabenblatt als auch deckungsgleich im Lösungsblatt vorgesehen ist. Anstelle dieser Perforation kann jedoch auch jede andere geeignete lösbare Verbindung vorgesehen sein.

In weiterer Ausgestaltung der Erfindung ist vorgesehen, daß der Blattsatz als Durchschreibsatz ausgebildet ist bzw. ein zwischen Aufgabenblatt und Lösungsblatt angeordnetes Kopiermittel, beispielsweise ein Durchschreibpapier oder dgl., aufweist.

Aufgrund dieser Ausgestaltung ist es dem Benutzer des als Rätselspiel vorgesehenen Eintragspiels gemäß der Erfindung möglich, auf dem Aufgabenblatt, das die graphisch unvollständigen Bild- oder Schriftvorgaben aufweist, entsprechend einer Aufgabenstellung Lösungen in Form von entsprechenden Ergänzungen einzutragen. Da der Blattsatz als Durchschreibsatz ausgebildet ist bzw. zwischen seinem Aufgabenblatt und Lösungsblatt ein Kopiermittel aufweist, kopieren sich diese auf dem Aufgabenblatt eingetragenen Lösungsergänzungen auf dem als Aufgabenblatt ausgestalteten, die graphisch identischen Druckvorgaben enthaltenden Lösungsblatt. Hierbei ist das Lösungsblatt, wie schon erwähnt, außerdem mit den gedruckten Zusatzvorgaben versehen, welche die vorgefertigten richtigen Lösungen des Rätselspiels bzw. Eintragspiels darstellen und nach Eintragende mit den darauf kopierten Eintragungen vergleichbar sind. Stattdessen kann das Lösungsblatt auch einen im Vergleich zum Aufgabenblatt fehlenden Aufdruck enthalten, um hierdurch optisch die Lösung zu verdeutlichen.

Das obere Aufgabenblatt und das untere Lösungsblatt liegen deckungsgleich übereinander und sind am Rand - entweder teilweise oder vollständig umlaufend - lösbar verbunden. Dadurch ist das Einsehen auf das Lösungsblatt zunächst ver hindert. Erst nach dem Ablösen der Blattverbindung wird das darunterliegende Lösungsblatt - und damit die hierauf kopierte Eintragung - offengelegt.

Selbstverständlich ist es möglich, anstelle eines einzigen Lösungsblattes auch mehrere Lösungsblätter vorzusehen, die unter - bzw. übereinanderliegend mit dem Aufgabenblatt verbunden sind.

Die Erfindung wird im folgenden anhand der Zeichnung näher erläutert. Es zeigen:

Fig. 1 schematisch perspektivisch das Eintragspiel gemäß der Erfindung mit einem obenliegenden Aufgabenblatt und einem darunterliegenden Lösungsblatt sowie

Fig. 2 das Lösungsblatt in Draufsicht.

Wie aus der Zeichnung ersichtlich, ist das dargestellte Eintragspiel als Blattsatz ausgebildet, das ein obenliegendes Aufgabenblatt 1 sowie ein deckungsgleich darunterliegendes Lösungsblatt 2 aufweist.

Das Aufgabenblatt 1 ist mit dem Lösungsblatt 2 über eine am Rand umlaufende lösbare Verbindung 3 verbunden. Diese weist bei dem dargestellten Ausführungsbeispiel eine umlaufende Perforation 6 auf, die sowohl im Aufgabenblatt 1 als auch deckungsgleich im Lösungsblatt 2 vorgesehen ist.

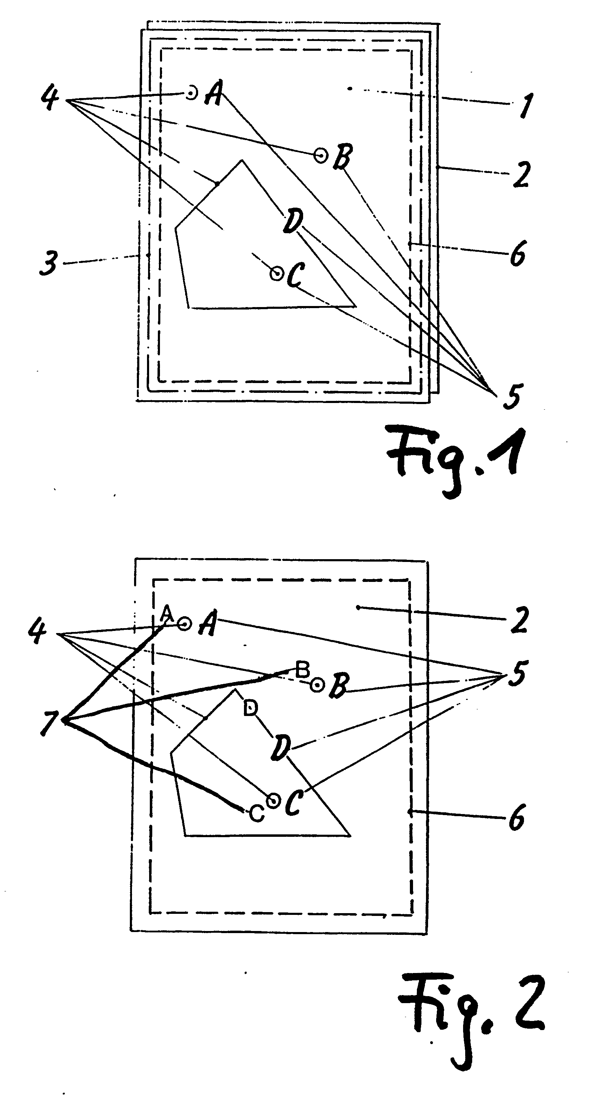

Das Aufgabenblatt 1 ist mit gedruckten Vorgaben 4 versehen, die die Form von Punkten und/oder Linien und/oder Schriften aufweisen. Diese gedruckten Vorgaben 4 sind in identischer Form auch auf dem Lösungsblatt 2 angeordnet, wie deutlich aus Fig. 2 ersichtlich. Zusätzlich hierzu weist das Lösungsblatt 2 Zusatzvorgaben 7 in Form von gedruckten Punkten und/oder Linien und/oder Schriften auf, welche vorge druckte Lösungen darstellen.

Die vom Benutzer des Eintragspiels auf dem Aufgabenblatt 1 von Hand vorgenommenen Eintragungen 5 kopieren bzw. drucken sich als identische Eintragungen 5 auf das Lösungsblatt 2 durch, da der Blattsatz 1, 2 beim dargestellten Ausführungsbeispiel als Durchschreibsatz ausgebildet ist.

Somit läßt sich dann nach erfolgtem ergänzendem Eintrag 5 auf dem Aufgabenblatt 1, wenn die zwischen Aufgabenblatt 1 und Lösungsblatt 2 vorgesehene lösbare Perforation 6 aufgetrennt worden ist, die auf dem Lösungsblatt 2 kopierte Eintragung 5 mit der hierauf angeordneten vorgedruckten Lösung 7 auf Übereinstimmung bzw. auf Abweichung vergleichen.

Das beschriebene Eintragspiel läßt sich nicht nur mit geringem Aufwand herstellen, sondern es weist auch vielfältige Gestaltungs- und Spielmöglichkeiten auf. So kann es beispielsweise als geographisches Rate- bzw. Abfragespiel, als Sachquizspiel usw. usw. ausgestaltet sein, wobei in jedem Fall der Spielanreiz gewahrt bleibt und stets hoch ist.

oder dgl., aufweist.

## Ansprüche

1. Eintragspiel
**dadurch gekennzeichnet,**
daß es als Blattsatz (1, 2) ausgebildet ist, bei dem unter einem als Aufgabenblatt (1) ausgestalteten Deckblatt, insbesondere aus Papier, deckungsgleich wenigstens ein Unterblatt angeordnet ist, das als Lösungsblatt (2) ausgestaltet und mit dem Aufgabenblatt (1) verbunden ist.

2. Eintragspiel nach Anspruch 1,
**dadurch gekennzeichnet,**
daß das Aufgabenblatt (1) mit einem Aufdruck (4) versehen ist und daß das Lösungsblatt (2) deckungsgleich denselben Aufdruck (4) wie das Aufgabenblatt (1) aufweist sowie außerdem einen Zusatzaufdruck (7) und/oder einen fehlenden Aufdruck besitzt.

3. Eintragspiel nach Anspruch 1 oder 2,
**dadurch gekennzeichnet,**
daß das Aufgabenblatt (1) mit dem Lösungsblatt (2) durch eine am Rand angeordnete lösbare Verbindung (3) verbunden ist.

4. Eintragspiel nach Anspruch 3,
**dadurch gekennzeichnet,**
daß die lösbare Verbindung (3) an sämtlichen Rändern des Eintragspiels vorgesehen ist.

5. Eintragspiel nach Anspruch 3 oder 4,
**dadurch gekennzeichnet,**
daß die lösbare Verbindung (3) eine Perforation (6) aufweist, die sowohl im Aufgabenblatt (1) als auch deckungsgleich im Lösungsblatt (2) vorgesehen ist.

6. Eintragspiel nach einem der Ansprüche 1 bis 5,
**dadurch gekennzeichnet,**
daß der Blattsatz (1, 2) als Durchschreibsatz ausgebildet ist bzw. ein zwischen seinem Aufgabenblatt (1) und seinem Lösungsblatt (2) angeordnetes Kopiermittel, beispielsweise ein Durchschreibpapier

EP 0 399 229 A1

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-1 622 876 (DOBRINDT) <br> * Ansprüche 1,6 * <br> --- | 1-6 | A 63 F 9/06 <br> A 63 F 9/18 <br> G 09 B 3/04 |
| Y | GB-A-1 582 331 (OWENSMITH) <br> * Anspruch 1 * <br> --- | 1-6 | |
| A | US-A-3 128 564 (ATHERTON) <br> * Spalte 2, Zeilen 40-43 * <br> --- | 1 | |
| A | FR-A-2 297 649 (GREGOIRE) <br> * Seite 2, Zeilen 6-31; Figuren * <br> ----- | 1 | |

| | RECHERCHIERTE SACHGEBIETE (Int. Cl.5) |
|---|---|
| | A 63 F <br> G 09 B <br> A 63 H |

Der vorliegende Recherchenbericht wurde für alle Patentansprüche erstellt

| Recherchenort | Abschlußdatum der Recherche | Prüfer |
|---|---|---|
| DEN HAAG | 02-08-1990 | GLAS J. |